# NEUE EUROPÄISCHE PATENTSCHRIFT

(11) **EP 0 856 686 B2**
(45) Veröffentlichungstag und Bekanntmachung des Hinweises auf die Entscheidung über den Einspruch: **02.05.2007**
(45) Hinweis auf die Patenterteilung: 08.11.2000
(21) Anmeldenummer: 97122585.9
(22) Anmeldetag: 20.12.1997
(51) Int. Cl.: F16H 7/18, F16H 7/08

(54) **Gleitschiene zum Führen und/oder Spannen einer Kette**
Sliding rail for guiding and/or tensioning a chain
Glissière pour guidage et/ou tensionner une chaîne

(30) Priorität: 10.04.1997 DE 19714763; 01.02.1997 DE 19703788
(43) Veröffentlichungstag der Anmeldung: 05.08.1998
(73) Patentinhaber: Dr.Ing.h.c. F. Porsche Aktiengesellschaft, 70435 Stuttgart (DE)
(72) Erfinder: Diehm, Volker, 74193 Schwaigern (DE)

(56) Entgegenhaltungen:
- DE-A- 494 464
- DE-A- 1 750 684
- DE-A- 3 506 010
- DE-A- 19 507 770
- DE-A- 19 606 002
- DE-C- 3 706 136
- DE-C- 4 001 304
- US-A- 4 921 472

## Beschreibung

Die Erfindung bezieht sich auf eine Gleitschiene nach dem Oberbegriff des Patentanspruchs 1.

Eine bekannte Gleitschiene, mit den Merkmalen des Oberbegriffs des Anspruchs 1 ist aus DE-PS 37 06 136 bekannt, umfaßt einen Gleitkörper und einen Träger, jeweils aus Kunststoff hergestellt, und hat sich in der Praxis beim Porsche 911 Carrera Motor - Porsche Service Information - 94, 911 Carrera, Bild 649, vorbildlich bewährt, und zwar sowohl als Spannschiene wie auch als Gleitschiene. Außerdem: Bei hoher Standfestigkeit unter anspruchsvollen Belastungsfällen hat sich vor allem gezeigt, daß Gewicht und Herstellungskosten deutlich niedriger sind als bei einer konventionellen Schiene, bestehend aus einem Alu-Träger und einem Kunststoff-Gleitbelagkörper, DE-OS 35 06 010.

Aufbauend auf der Lehre der vorstehenden praxisbewährten Schiene wurde vorgeschlagen, DE 195 07 770 A1, den Träger und den Gleitbelagkörper auf der der Kette zugewandten Seite im Querschnitt U-förmig zu gestalten. Dabei hintergreift der Gleitbelagkörper an den Schenkeln des U-förmigen Querschnitts den Träger. Dieser Ausführung haftet der Nachteil an, daß der U-förmige Querschnitt sich über eine wesentliche Länge der Schiene erstreckt, was zum einen hohes Gewicht verursacht und zum anderen zusätzlichen Werkstoff erfordert. Darüber hinaus beansprucht eine Gleitschiene mit dieser Querschnittswahl relativ viel Bauraum, was dem Bestreben, Brennkraftmaschine kompakt zu gestalten, entgegenwirkt.

Aufgabe der Erfindung ist es, die technisch bewährte Gleitschiene weiter zu verbessern, insbesondere bezüglich ihrer Befestigung an der Brennkraftmaschine.

Erfindungsgemäß wird diese Aufgabe durch die Merkmale des Patentanspruchs 1 gelöst. Weitere, die Erfindung ausgestaltenden Merkmale sind in den nachfolgenden Ansprüchen enthalten.

Die mit der Erfindung hauptsächlich erzielten Vorteile sind darin zu sehen, daß dank der Stützvorrichtung, bestehend aus Stützabschnitt und Aufliegebereich lediglich ein Bolzen und eine Buchse zur teleologischen Halterung der Gleitschiene erforderlich ist. Dies trägt zur weiteren Gewichts- und Kostenreduktion bei. Ein wirkungsvolles Zusammenwirken des Stützabschnitts mit dem Aufliegebereich wird erreicht, wenn letzterer aus verschleißfestem Kunststoff besteht; denn durch diese Maßnahme werden auch hohe Belastungen - gerade durch die Werkstoffkombination Stützabschnitt aus Metall und Aufliegebereich aus Kunststoff - über lange Betriebszeit sicher aufgenommen. Fertigungstechnisch einfach läßt sich der Stützabschnitt dadurch realisieren, daß er aus einem Stück mit dem Gleitbelagkörper hergestellt ist.

Die Linienkontaktstütze gewährleistet eine definierte Funktion zwischen Stützabschnitt und Aufliegebereich, und sie läßt sich durch konkave Gestaltung, vorzugsweise am Aufliegebereich, verwirklichen.

Die Kombination Gleitschiene - Gleitbelagkörper und Träger aus Kunststoff -, einziger Bolzen, Stützvorrichtung und überkragendes Ende der Gleitschiene ermöglicht einen kontrollierten Kettenlauf, bei dem antriebsbedingte Bewegungen der Kette aus der Konstruktionslage heraus wirkungsvoll aufgenommen werden. Dies wird auch noch durch die örtliche widerstandsmomenterhöhende Profilierung unterstützt.

Der Aufliegebereich ist fest mit dem Gleitkörper verbunden, weil der erste Steg mit dem zweiten Steg durch den Träger durchdringende Rippen eine Baueinheit bilden.

Quer zur Kettenlaufrichtung ist die Gleitschiene durch eine Führungsvorrichtung fixiert. In der Buchse des Trägers ist eine Hülse aus verschleißfestem Kunststoff vorgesehen, die eine Präzisionsbohrung für den als kostengünstiges Bauteil ausgebildeten Bolzen darstellt.

Schließlich trägt die elastische Dämpfungseinrichtung oder Federvorrichtung dazu bei, daß Gleitschienen sich geräuscharm am Kurbelgehäuse abstützt, was bei Brennkraftmaschinen mit bauartspezifischen Betriebseigenschaften, z.B. Dieselmotoren, von Bedeutung ist.

In der Zeichnung werden Ausführungsbeispiele der Erfindung gezeigt, die nachstehend näher beschrieben sind.

Es zeigt
- Fig. 1: eine Seitenansicht einer Gleitschiene,
- Fig. 2: einen Schnitt nach der Linie II-II der Fig. 1,
- Fig. 3: einen Schnitt nach der Linie III-III der Fig. 1,
- Fig. 4: eine Ansicht entsprechend Fig. 3 einer anderen Ausführungsform
- Fig. 5: eine Ansicht entsprechend Fig. 1 einer anderen Ausführungsform,
- Fig. 6: einen Schnitt nach der Linie VI-VI der Fig. 5,
- Fig. 7: einen Schnitt nach der Linie VII-VII der Fig. 5,
- Fig. 8: eine Teilansicht der Fig. 1 einer anderen Ausführungsform,
- Fig. 9: einen Schnitt nach der Linie IX-IX der Fig. 8.

In Fig. list eine Gleitschiene 1 dargestellt, die zur Führung oder zum Spannen einer Kette 2 dient. Sie ist beispielsweise ein Endlosglied eines Kettentriebes, der Bestandteil einer Brennkraftmaschine 3 ist, von der lediglich ein Kurbelgehäuseabschnitt 4 gezeigt wird. Der Kettentrieb wirkt zwischen einer Kurbelwelle und einer Nockenwelle - Porsche Service Information Technik '94, 911 Carrera, Bild 649, Porsche Boxster Sonderausgabe ATZ, Automobiltechnische Zeitschrift und MTZ, Motortechnische Zeitschrift, Dezember 1996, S. 55 und Sport Auto 1/1997, S. 25-.

Die Gleitschiene 1 wird gebildet durch einen Träger 5 und einen Gleitbelagkörper 6, der eine Gleitfläche 7 für die Kette 2 umfaßt. Träger 5 und Gleitbelagkörper 6 bestehen aus Kunststoff unterschiedlicher Spezifikation, vorzugweise Polyamid, wobei für den Träger 5 Polyamid mit Glasfaserzusätzen verwendet wird, für den Gleitbelagkörper 6 verschleißfestes Polyamid ohne Glasfaserzusätze.

Die Gleitfläche 7 wird von Schultern 8, 9 begrenzt, so daß der Gleitbelagkörper 6 einen U-förmigen Umriss aufweist.

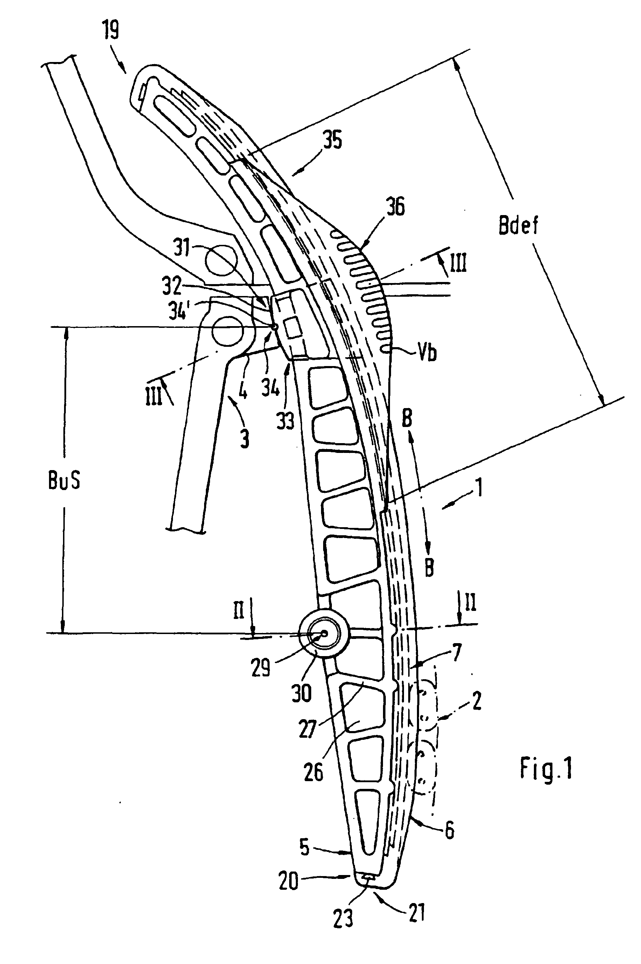

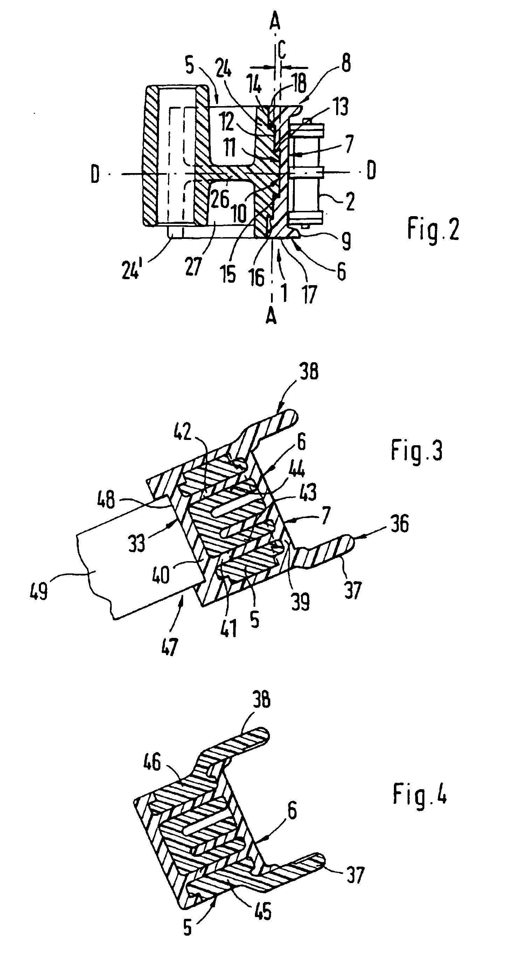

Der Träger 5 und der Gleitbelagkörper 6 sind in einer Ebene A-A zusammengesetzt. Zwischen diesen, eine Einheit bildenden Bauteilen, sind ineinandergreifende und sich gegenseitig hintergreifende Vorsprünge 10 vorgesehen, die im Ausführungsbeispiel gem. Fig. 2 durch zwei Schwalbenschwanzverbindungen 11, 12 gebildet werden; sie erstrecken sich entlang einer Kettenlauflinie B-B (Fig. 1).

Die Schwalbenschwanzverbindungen 11, 12 sind im Querschnitt gesehen lagemäßig versetzt - Abstand C - zueinander angeordnet und weisen hintergreifende Profilierungen 13, 14 und 15, 16 auf. Die Profilierungen 13, 15 der Schwalbenschwanzverbindung 9 sind benachbart einer Mittellängsebene D-D der Gleitschiene 1 angeordnet; die Profilierungen 14, 16 der Schwalbenschwanzverbindung 12 benachbart von Randzonen 17, 18 der Gleitschiene 1.

Die Gleitschiene wird wie folgt hergestellt: Zunächst wird der Träger 5 im Spritzgußverfahren gefertigt, und zwar mit den zugehörigen Profilierungen der Schwalbenschwanzverbindungen 11, 12 (Fig. 2). Danach wird der Träger 5 als Basiskörper verwendet und der Gleitbelagkörper 6 im Spritzgußverfahren mit besagtem Träger vereinigt. Denkbar ist auch ein anderer gestufter Fertigungsprozeß, nämlich zuerst den Gleitbelagkörper zu produzieren und danach den Träger mit ihm zusammenzuführen.

Der Träger 5 besitzt Endabschnitte 19, 20, wobei letzterer bei 21 etwa rechtwinklig zu einer Trägerfläche 22 verläuft. Am Endabschnitt 20 liegt der Gleitbelagkörper 6 an und wird mit einer ebenfalls zwischen Träger 5 und Gleitbelagkörper 6 wirkenden ineinandergreifenden Vorrichtung 23 - ähnlich wie eine Schwalbenschwanzverbindung wirkend - in Lage gehalten.

In Fig. 2 wird gezeigt, daß der Träger 5 beabstandete Querflansche 24, 25 aufweist, die über einen Steg 26 miteinander verbunden sind, wodurch eine doppel-T-förmige Konfiguration entsteht. Seitlich des Steges 26 sind mehrere, im Abstand zueinander angeordnete Querrippen 27 vorgesehen, die zwischen den Querflanschen 24, 25 verlaufen und senkrecht und/oder in geneigtem Winkel zu einer Kettenlauflinie B-B ausgerichtet sind.

Zur Halterung der Gleitschiene 1 an der Brennkraftmaschine 3 dient ein einziger Bolzen 29, der in einer Buchse 30 des Trägers 5 ruht. Mit Abstand zur Buchse 30 ist zwischen Kurbelgehäuseabschnitt 4 und Gleitschiene 1 eine Stützvorrichtung 31 vorgesehen, die durch einen Stützabschnitt 32 am Kurbelgehäuseabschnitt 4 und einen Aufliegebereich 33 an der Gleitschiene 1 dargestellt ist. Der Aufliegebereich 33 wird unter der Spannung der Kette 2 gegen den Stützabschnitt 32 gespannt, ist beabstandet zur Gleitfläche 7 am Träger 5 angebracht und besteht aus einem verschleißfesten Kunststoff - Polyamid ohne Glasfaserzusätze - . Außerdem ist der Aufliegebereich 33 aus einem Stück mit dem Gleitbelagkörper 6 hergestellt. Es besteht auch die Möglichkeit, den Aufliegebereich unabhängig vom Gleitbelagkörper 6 am Träger 5 zu befestigen.

Bei 34 ist ersichtlich, daß der Stützabschnitt 32 und der Aufliegebereich 33 über eine Art Linienkontaktstütze 34' zusammenwirken; letztere erstreckt sich quer zur Gleitschiene 1 und wird bei Belastung flächig. Im Ausführungsbeispeil ist hierzu der Aufliegebereich 33 konvex oder ballig ausgeführt, wogegen der Stützabschnitt 32 eine ebene Fläche ist.

Ein entfernt vom Bolzen 30 liegender Endbereich 35 der Gleitschiene 1 kragt über die Stützvorrichtung 31 hinaus, wobei die Gleitschiene 1 im Aufliegebereich 33 eine örtliche Profilierung 36, z.B. U-förmigen Querschnitts aufweist, Fig. 3, durch die das Widerstandsmoment der Gleitschiene in dieser besonders beanspruchten Zone erhöht ist. Dabei nimmt die Höhe von Schenkeln 37, 38 der Profilierung 35 über einen definierten Bereich Bdef in Laufrichtung der Kette 2 gleichmäßig ab dergestalt, daß die Schenkel 36, 37 örtlich einen bogenförmigen Verlauf (Vb) aufweisen. Gemäß Fig. 3 liegen ein erster, die Kettenlauffläche 7 umfassender Steg 39 und ein zweiter Bereich, den Aufliegebereich 33 aufweisender Steg 40 am Träger 5 an, und die Stege 39, 40 - sie verlaufen parallel zueinander - sind über Rippen 41, 42 verbunden, die Kanäle 43, 44 im Träger 5 durchdringen. Die Schenkel 37, 38 sind Bestandteil des Gleitbelagkörpers 6. Darüber hinaus umschließt der Gleitbelagkörper 6 allseitig den Träger 5.

In Fig. 4 sind die Schenkel 37, 38 aus einem Stück mit dem Träger 5 hergestellt, die als Verlängerungen seitlicher Begrenzungswangen 45, 46 ausgebildet sind.

Zur Lagefixierung der Gleitschiene 1 ist zwischen Stützabschnitt 32 und Aufliegebereich 33 eine Führungsvorrichtung 47 vorgesehen. Sie umfaßt eine Aufnahmeeinrichtung 48 und einen Eingriffsabschnitt 49, wobei die Aufnahmeeinrichtung 48 im Querschnitt U-förmig ausgebildet ist.

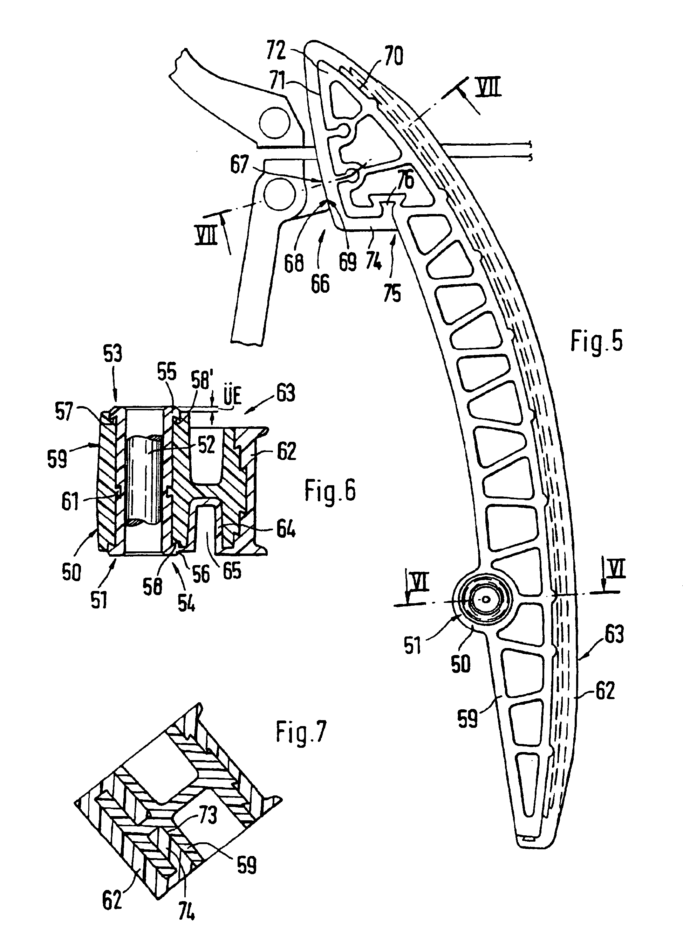

Die Fig. 5 gibt wieder, daß in eine Buchse 50 eine zylindrische Hülse 51 aus verschleißfestem Kunststoff - Polyamid ohne Glasfaserzusätze - eingesetzt ist. Die Hülse 51 - umfassend eine Präzisionsbohrung für einen Bolzen 52 - ist an ihren Enden 53, 54 mit kragenartigen Erweiterungen 55, 56 versehen, die Aufnahmen 57, 58 in einem Träger 59 einer Gleitschiene 60 hintergreifen. Die seitlich über den Träger 59 überstehenden (Maß ÜE) Erweiterungen 55, 56 und die Aufnahmen 57, 58 arbeiten über Hinterschneidungen 59 zusammen. Der überstehende Bereich der Erweiterungen 55, 56 kann als Anlage an dem Gehäuse der Brennkraftmaschine genutzt werden, um eine zusätzliche seitliche Abstützung der Gleitschiene 1 zu bewirken. Zusätzlich sind bei 60 in radialer Richtung zwischen Hülse 51 und Träger 59 Schwalbenschwanzverbindungen 61 vorgesehen.

Die Hülse 51 ist aus einem Stück mit einem Gleitbelagkörper 62 hergestellt, der zusammen mit dem Träger 59 die Gleitschiene 63 bildet. Zwischen der Hülse 51 und dem Gleitbelagkörper 62 erstreckt sich eine Wand 64, die außerhalb des Trägers 59, jedoch an ihm anliegend, verläuft. Die Wand 64 folgt einer Ausnehmung 65 des Trägers 59.

Bei 66 wird eine Stützvorrichtung 67 gezeigt, die beabstandet zum Bolzen 52 bzw. Buchse 50 verläuft. Die Stützvorrichtung 67 umfaßt einen Stützabschnitt 68 und einen Aufliegebereich 69. Der Aufliegebereich 69 ist Teil des Gleitbelagkörpers 62, der um eine obere Wand 70 und eine untere Wand 71 eines spitzwinklig gestalteten Endbereiches 72 des Trägers 59 herumgezogen ist. Die untere Wand 71 bildet den Aufliegebereich 69 und ist aus einem Stück mit dem Gleitbelagkörper 62 hergestellt.

Fig. 7 zeigt eine mögliche Verbindung des Aufliegebereichs 69 mit dem Träger 59. Danach sind örtlich im Träger 59 Ausnehmungen 73 vorgesehen, in die korrespondierende Zapfen 74 des Gleitbelagkörpers 62 hineinragen.

Schließlich ist der Gleitbelagkörper 62 von der unteren Wand 71 aus nochmals mit einer Abwinklung 74 versehen, wobei ihr Ende 75 mittels einer Schwalbenschwanzverbindung 76 festgelegt ist.

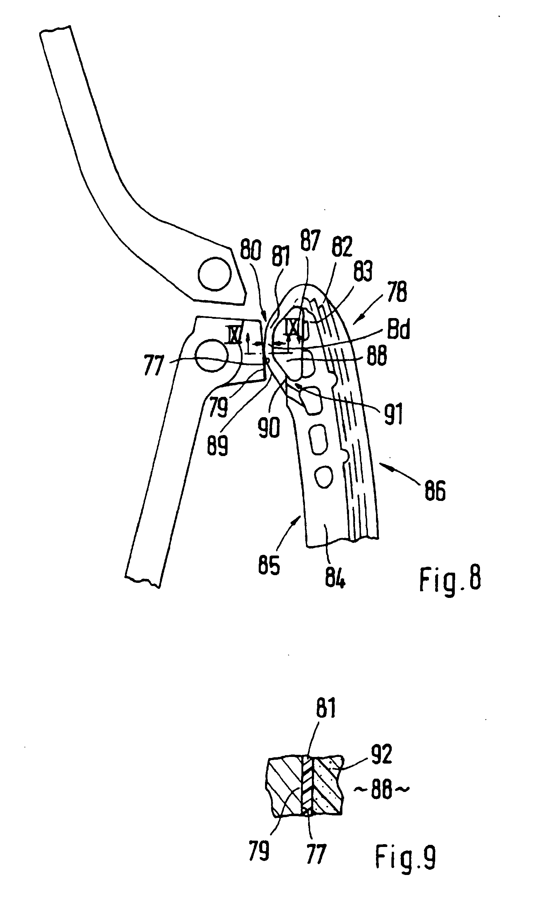

Gemäß Fig. 8 ist der Aufliegebereich 77 der Gleitschiene 78, der auf dem Stützabschnitt 79 aufliegt, als elasatische Dämpfungseinrichtung oder Federvorrichtung 80 ausgebildet. Hierzu ist der Aufliegebereich 77 als Blattfeder 81 dargestellt, deren Blattdicke Bd beispielsweise iterativ festgelegt ist. Die Blattfeder 81 ist von der Gleitschiene 78 aus gesehen konvex gestaltet, um eine Linienkontaktwirkung zu erreichen (Stützabschnitt 32 und Aufliegebereich 33).

Die Blattfeder 81 ist aus einem Stück mit Gleitbelagkörper 82 hergestellt, der um einem Endbereich 83 des Trägers 84 herumgezogen ist, dergestalt, daß er entlang von beiden Längsseiten 85, 86 des Trägers 84 verläuft. Dabei bildet die Blattfeder 81 eine Verlängerung des Gleitbelagkörpers 82.

Außerdem ist die Blattfeder 81 zusammen mit einem ausnehmungsartigen Trägerabschnitt 87 des Trägers 84 so ausgeführt, daß eine einen Hohlraum 88 begrenzende Öse 89 entsteht, deren Ende 90 sich bei 91 am Träger 84 abstützt. In dem Hohlraum 88 ist ein Einsatz 92 - Fig. 9 - aus federnd-elastischem Werkstoff, wie Kautschuk, Elastomere oder dgl. eingesetzt.

## Patentansprüche

1. Gleitschiene (1; 63 ; 78) zum Führen und/oder Spannen einer Kette, insbesondere für einen Nockenwellenantrieb einer Brennkraftmaschine, umfassend einen Gleitbelagkörper (6; 62; 82) und einen Träger (5; 59; 84), die aus verschleißfestem, bzw. mechanisch hoch belastbarem Kunststoff bestehen, wobei die Gleitschiene einerseits mit einem von einer Buchse (30;50) aufgenommenen Bolzen (29) an einem Kurbelgehäuseabschnitt (4) der Brennkraftmaschine gehalten ist und andererseits mit einer Stützvorrichtung versehen ist, **dadurch gekennzeichnet, daß** die Stützvorrichtung (31; 67) durch einen Stützabschnitt (32; 68; 79) des Kurbelgehäuseabschnitts (4) und durch einen Aufliegebereich (33; 69) der Gleitschiene (1; 63; 78) gebildet wird, welcher Aufliegebereich (33; 69; 77) ebenfalls aus verschleißfestem Kunststoff besteht wobei der Aufliegebereich (33;69; 77) aus einem Stück mit dem Gleitbelagkörper (6;62; 82) hergestellt ist.

2. Gleitschiene nach Anspruch 1, **dadurch gekennzeichnet, daß** der Stützabschnitt (32;68) und der Aufliegebereich (33;69) über eine Art Linienkontaktstütze (34') zusammenwirken.

3. Gleitschiene nach Anspruch 2, **dadurch gekennzeichnet, daß** die Linienkontaktstütze (34') durch konvexe Gestaltung gebildet wird.

4. Gleitschiene nach Anspruch 3, **dadurch gekennzeichnet, daß** die konvexe Gestaltung zumindest am Aufliegebereich (33; 69) vorgesehen ist.

5. Gleitschiene nach Anspruch 1, **dadurch gekennzeichnet, daß** ein freier Endbereich (35) der Gleitschiene über den Aufliegebereich (33) überkragt.

6. Gleitschiene nach Anspruch 1, **dadurch gekennzeichnet, daß** im Aufliegebereich (33) eine örtliche Profilierung (36), z.B. U-förmigen Querschnitts, zur Widerstandserhöhung vorgesehen ist.

7. Gleitschiene nach Anspruch 6, **dadurch gekennzeichnet, daß** die Höhe der Schenkel (37, 38) des U-förmigen Querschnitts - in Richtung Kettenlauflinie B-B gesehen - beiderseits des Auflagebereichs (33) gleichmäßig abnimmt.

8. Gleitschiene nach einem oder mehreren der vorangehenden Ansprüche, **dadurch gekennzeichnet, daß** ein erster Steg (39) für eine Kettenlauffläche (7) des Gleitbelagkörpers (6) und ein zweiter Steg (40) des Auflagebereichs (33) am Träger (5) anliegen und über ein oder mehrere, den Träger (5) durchdringende Rippen (41, 42) miteinander verbunden sind.

9. Gleitschiene nach einem oder mehreren der vorangehenden Ansprüche, **dadurch gekennzeichnet, daß** der Gleitbelagkörper (6) im Aufliegebereich (33) den Träger (5) allseitig umschließt.

10. Gleitschiene nach Anspruch 1, **dadurch gekennzeichnet, daß** zwischen Stützabschnitt (32) und Aufliegebereich (33) eine Führungsvorrichtung (47) vorgesehen ist.

11. Gleitschiene nach Anspruch 10, **dadurch gekennzeichnet, daß** die Führungsvorrichtung (47) eine Aufnahmeeinrichtung (48) und einen Eingriffsabschnitt (49) aufweist.

12. Gleitschiene nach Anspruch 11, **dadurch gekennzeichnet, daß** die Aufnahmeeinrichtung (48) im Querschnitt U-förmig ausgebildet ist.

13. Gleitschiene nach Anspruch 1, **dadurch gekennzeichnet, daß** in der Buchse (49) eine zylindrische Hülse (50) aus verschleißfestem Kunststoff vorgesehen ist.

14. Gleitschiene nach Anspruch 13, **dadurch gekennzeichnet, daß** die Hülse (51) an ihren Enden (53, 54) kragenartige Erweiterungen (53, 54) umfaßt, die Aufnahmen (55, 56) im Träger hintergreifen.

15. Gleitschiene nach Anspruch 14, **dadurch gekennzeichnet, daß** die Erweiterungen (53, 54) und die Aufnahmen (55, 56) über Hinterschneidungen (58') zusammenarbeiten.

16. Gleitschiene nach einem oder mehreren der vorangehenden Ansprüche, **dadurch gekennzeichnet, daß** die Hülse (51) und der Gleitbelagkörper (62) aus einem Stück hergestellt sind.

17. Gleitschiene nach Anspruch 16, **dadurch gekennzeichnet, daß** zwischen dem Gleitbelagkörper (62) und der Hülse (51) eine außerhalb des Trägers (59) anliegende Wand (64) verläuft.

18. Gleitschiene nach Anspruch 1, **dadurch gekennzeichnet, daß** der Gleitbelagkörper (62) an einem Endbereich (72) um eine obere Wand (70) und eine untere Wand (71) des Trägers (59) herumgezogen ist, welche untere Wand (71) den Aufliegebereich (69) bildet.

19. Gleitschiene nach Anspruch 18, **dadurch gekennzeichnet, daß** der Gleitbelagkörper (62) von der unteren Wand (71) aus nochmals mit einer Abwinklung (74) versehen ist.

20. Gleitschiene nach Anspruch 1, **dadurch gekennzeichnet, daß** der Aufliegebereich (77) als elastische Dämpfungseinrichtung oder Federvorrichtung (80) ausgebildet ist.

21. Gleitschiene nach Anspruch 20, **dadurch gekennzeichnet, daß** die Federvorrichtung (80) des Aufliegebereichs (77) eine Art Blattfeder (81) ist.

22. Gleitschiene nach Anspsruch 21, **dadurch gekennzeichnet, daß** die Blattfeder (81) mindestens bereichsweise konvex ausgebildet ist.

23. Gleitschiene nach den Ansprüchen 20, 21, **dadurch gekennzeichnet, daß** der Gleitbelagkörper (82) um einen Endbereich (83) des Trägers (84) herumgeführt ist und die dem Stützabschnitt (79) zugewandte Blattfeder (81) aus einem Stück mit dem Gleitbelagkörper (82) hergestellt ist.

24. Gleitschiene nach Anspruch 23, **dadurch gekennzeichnet, daß** die Blattfeder (81) zusammen mit einem Trägerabschnitt (87) eine Art einen Hohlraum (88) begrenzende Öse (89) bildet, deren Ende (90) sich am Träger (84) abstützt.

25. Gleitschiene nach Anspruch 24, **dadurch gekennzeichnet, daß** der Hohlraum (88) mit einem Einsatz (92), z.B. aus federnd-elastischem Werkstoff wie Kautschuk, Elastomere oder dgl. ausgeführt ist.

## Claims

1. A sliding rail (1; 63; 78) for guiding and/or tensioning a chain, in particular for a camshaft drive of an internal-combustion engine, comprising a slide-lining member (6; 62; 82) and a support (5; 59; 84), which consist of wear-resistant or mechanically highly stressable plastics material, wherein the sliding rail is held on the one hand on a portion (4) of the crankcase of the internal-combustion engine by a pin (29) received by a bush (30; 50) and is provided on the other hand with a supporting device, **characterized in that** the supporting device (31; 67) is formed by a support portion (32; 68; 79) of the portion (4) of the crankcase and by an abutment area (33; 69) of the sliding rail (1; 63; 78), the abutment area (33; 69; 77) likewise consisting of wear-resistant plastics material, wherein the abutment area (33; 69; 77) is produced integrally with the slide-lining member (6; 62; 82).

2. A sliding rail according to Claim 1, **characterized in that** the support portion (32; 68) and the abutment area (33; 69) cooperate by way of a type of linear-contact support (34').

3. A sliding rail according to Claim 2, **characterized in that** the linear-contact support (34') is formed by convex shaping.

4. A sliding rail according to Claim 3, **characterized in that** the convex shaping is provided at least on the abutment area (33; 69).

5. A sliding rail according to Claim 1, **characterized in that** a free end area (35) of the sliding rail projects beyond the abutment area (33).

6. A sliding rail according to Claim 1, **characterized in that** a local profiling (36), for example of U-shaped cross-section, is provided in the abutment area (33) for increasing resistance.

7. A sliding rail according to Claim 6, **characterized in that** the height of the arms (37, 38) of the U-shaped cross-section - as viewed in the direction of the running line **B-B** of the chain - decreases uniformly on both sides of the abutment area (33).

8. A sliding rail according to one or more of the preceding Claims, **characterized in that** a first web (39) for a chain-running face (7) of the slide-lining member (6) and a second web (40) of the abutment area (33) rest on the support (5) and are connected together by way of one or more ribs (41, 42) passing through the support (5).

9. A sliding rail according to one or more of the preceding Claims, **characterized in that** the slide-lining member (6) surrounds the support (5) on all sides in the abutment area (33).

10. A sliding rail according to Claim 1, **characterized in that** a guide device (47) is provided between the support portion (32) and the abutment area (33).

11. A sliding rail according to Claim 10, **characterized in that** the guide device (47) has a receiving device (48) and an engagement portion (49).

12. A sliding rail according to Claim 11, **characterized in that** the receiving device (48) is U-shaped in cross-section.

13. A sliding rail according to Claim 1, **characterized in that** a cylindrical sleeve (50) [*sic - recte* (51)] of wear-resistant plastics material is provided in the bush (49) [*sic - recte* (50)].

14. A sliding rail according to Claim 13, **characterized in that** the sleeve (51) is provided at the ends (53, 54) thereof with projection-like enlargements (53, 54) engaging behind receiving means (55, 56) in the support.

15. A sliding rail according to Claim 14, **characterized in that** the enlargements (53, 54) and the receiving means (55, 56) cooperate by way of undercuttings (58').

16. A sliding rail according to one or more of the preceding Claims, **characterized in that** the sleeve (51) and the slide-lining member (62) are produced in one piece.

17. A sliding rail according to Claim 16, **characterized in that** a wall (64) adjoining the outside of the support (59) extends between the slide-lining member (62) and the sleeve (51).

18. A sliding rail according to Claim 1, **characterized in that** at one end area (72) the slide-lining member (62) is drawn around an upper wall (70) and a lower wall (71) of the support (59), the lower wall (71) forming the abutment area (69).

19. A sliding rail according to Claim 18, **characterized in that** the slide-lining member (62) is further provided with an angled portion (74) from the lower wall (71).

20. A sliding rail according to Claim 1, **characterized in that** the abutment area (77) is constructed in the form of a resilient damping device or spring device (80).

21. A sliding rail according to Claim 20, **characterized in that** the spring device (80) of the abutment area (77) is a type of leaf spring (81).

22. A sliding rail according to Claim 21, **characterized in that** the leaf spring (81) is convex at least in part.

23. A sliding rail according to Claims 20, 21, **characterized in that** the slide-lining member (82) extends around an end area (83) of the support (84), and the leaf spring (81) facing the support portion (79) is produced integrally with the slide-lining member (82).

24. A sliding rail according to Claim 23, **characterized in that** the leaf spring (81) together with a support portion (87) forms a type of lug (89) which bounds a cavity (88) and the end (90) of which is supported on the support (84).

25. A sliding rail according to Claim 24, **characterized in that** the cavity (88) is produced with an insert (92), for example of a springing-resilient material such as rubber, elastomers or the like.

## Revendications

1. Glissière (1 ; 63 ; 78) pour guider et/ou tendre une chaîne, notamment pour un entraînement d'arbre à cames d'un moteur à combustion interne, comprenant un corps (6 ; 62 ; 8) à garniture de glissement et un support (5 ; 59 ; 84) qui est en matière plastique résistante à l'usure, ou très résistante mécaniquement, la glissière étant maintenue d'une part sur un segment de carter (4) du moteur à combustion interne, par un axe (29) logé dans une douille (30 ; 50) et étant pourvue d'autre part, d'un dispositif d'appui, **caractérisée en ce que** le dispositif d'appui (31 ; 67) est formé par un segment d'appui (32 ; 68 ; 79) du segment de carter (4) et par une zone de support (33 ; 69) de la glissière (1 ; 63 ; 78), laquelle zone de support (33 ; 69 ; 77) est également en matière plastique résistante à l'usure, **en ce que** la zone de support (33 ; 69 ; 77) est réalisée d'une pièce avec le corps (6; 62; 82) à garniture de glissement.

2. Glissière selon la revendication 1, **caractérisée en ce que** le segment d'appui (32 ; 68) et la zone de support (33 ; 69) coopèrent par une sorte d'appui de contact en ligne (34').

3. Glissière selon la revendication 2, **caractérisée en ce que** l'appui de contact en ligne (34') a une forme convexe.

4. Glissière selon la revendication 3, **caractérisée en ce que** la forme convexe est prévue au moins sur la zone de support (33 ; 69).

5. Glissière selon la revendication 1, **caractérisée en ce qu'**une zone terminale libre (35) de la glissière est en porte-à-faux par rapport à la zone de support (33).

6. Glissière selon la revendication 1, **caractérisée en ce que** dans la zone de support (33) est prévu un profilage (36) local, par exemple de section transversale en U, pour augmenter la résistance.

7. Glissière selon la revendication 6, **caractérisée en ce que** la hauteur des branches (37, 38) de la section en U - vue en direction de la ligne B-B de circulation de la chaîne - diminue régulièrement des deux côtés de la zone de support (33).

8. Glissière selon une ou plusieurs des revendications précédentes, **caractérisée en ce qu'**une première ailette (39) pour une surface de roulement de chaîne (7) du corps (6) à revêtement de glissement et une deuxième ailette (40) de la zone de support (33) s'appliquent contre le support (5) et sont reliées entre elles par une ou plusieurs nervures (41, 42) qui traversent le support (5).

9. Glissière selon une ou plusieurs des revendications précédentes, **caractérisée en ce que** le corps (6) à revêtement de glissement entoure de tous côtés le support (5) dans la zone de support (33).

10. Glissière selon la revendication 1, **caractérisée en ce qu'**un dispositif de guidage (47) est prévu entre le segment d'appui (32) et la zone de support (33).

11. Glissière selon la revendication 10, **caractérisée en ce que** le dispositif de guidage (47) comporte un dispositif de réception (48) et un segment d'engagement (49).

12. Glissière selon la revendication 11, **caractérisée en ce que** le dispositif de réception (48) présente une section transversale en U.

13. Glissière selon la revendication 1, **caractérisée en ce qu'**un manchon cylindrique (50) en matière plastique résistante à l'usure est prévu dans la douille (49).

14. Glissière selon la revendication 13, **caractérisée en ce que** le manchon (51) comprend, à ses extrémités (53, 54) des élargissements (53, 54) du type col qui passent derrière les logements (55, 56) dans le support.

15. Glissière selon la revendication 14, **caractérisée en ce que** les élargissements (53, 54) des logements 55, 56) coopèrent par des détalonnages (58').

16. Glissière selon une ou plusieurs des revendications précédentes, **caractérisée en ce que** le manchon (51) et le corps (621) à garniture de glissement sont réalisés d'une pièce.

17. Glissière selon la revendication 16, **caractérisée en ce qu'**une paroi (64) qui s'applique à l'extérieur du support (59), s'étend entre le corps (62) à revêtement de glissement et le manchon (51).

18. Glissière selon la revendication 1, **caractérisée en ce que** le corps (62) à garniture de glissement passe, dans une zone terminale (72), autour d'une paroi supérieure (70) et d'une paroi inférieure (71) du support (59), la paroi inférieure (71) formant la zone de support (69).

19. Glissière selon la revendication 18, **caractérisée en ce que** le corps (62) à garniture de glissement est pourvu encore une fois d'un coude (74), à partir de la paroi inférieure (71).

20. Glissière selon la revendication 1, **caractérisée en ce que** la zone de support (77) est réalisée en tant que dispositif d'amortissement élastique ou dispositif à ressort (80).

21. Glissière selon la revendication 20, **caractérisée en ce que** le dispositif à ressort (80) de la zone de support (77) est une sorte de ressort à lame (81).

22. Glissière selon la revendication 21, **caractérisée en ce que** le ressort à lame (81) est convexe au moins par endroits.

23. Glissière selon les revendications 20, 21, **caractérisée en ce que** le corps (82) à garniture de glissement passe autour d'une zone terminale (83) du support (84) et le ressort à lame (81) tourné vers le segment d'appui (79), est réalisé d'une pièce avec le corps (82) à garniture de glissement.

24. Glissière selon la revendication 23, **caractérisée en ce que** le ressort à lame (81) forme avec un segment (87) du support une sorte d'oeillet (89) qui délimite une cavité (88) et dont l'extrémité (90) prend appui contre le support (84).

25. Glissière selon la revendication 24, **caractérisée en ce que** la cavité (88) présente une garniture (92), par exemple en une matière à élasticité de ressort, telle que caoutchouc, élastomère ou similaire.
